# EUROPÄISCHE PATENTSCHRIFT

(11) **EP 1 245 437 B1**
(45) Veröffentlichungstag und Bekanntmachung des Hinweises auf die Patenterteilung: **27.10.2004**
(21) Anmeldenummer: 02007232.8
(22) Anmeldetag: 28.03.2002
(51) Int. Cl.: B60N 2/427

(54) **Sitzteil für einen Fahrzeugsitz mit Antisubmarining-Einrichtung**
Seating element for a vehicle seat with antisubmarining device
Assise de siège de véhicule avec dispositif d'anti-sous-marinage

(30) Priorität: 28.03.2001 DE 20105439 U
(43) Veröffentlichungstag der Anmeldung: 02.10.2002
(73) Patentinhaber: Johnson Controls GmbH, 51399 Burscheid (DE)
(72) Erfinder: Schmale, Uwe, 42499 Hückeswagen (DE)
(74) Vertreter: Kutzenberger, Helga, Dr.

(56) Entgegenhaltungen:
- DE-A- 4 300 801
- DE-A- 19 803 784
- FR-A- 2 755 913
- GB-A- 1 322 280

## Beschreibung

Die vorliegende Erfindung betrifft ein Sitzteil für einen Fahrzeugsitz mit einer Schutzeinrichtung gegen unfallbedingtes Durchrutschen einer Person, mit einer an einer tragenden Sitzstruktur angeordneten Sitzschale, die ausgehend von einem in Sitzrichtung vorderen Querträger zumindest bereichsweise in einem Neigungswinkel nach hinten abfallend verläuft.

Derartige Schutzeinrichtungen an bzw. in Fahrzeugsitzen werden auch als Antisubmarining-Einrichtung bezeichnet. Durch eine solche Schutzeinrichtung soll erreicht werden, dass die auf dem Sitz sitzende Person bei einem Unfall (Frontalcrash) nicht unter dem Beckengurt hinweg durchrutschen (durchtauchen) kann.

Ein derartiges Sitzteil ist aus der DE 41 28 954 A1 bekannt. Dabei besteht die tragende Sitzstruktur aus einem einstückigen Blechtiefziehteil mit einem Rahmen und dem als Brücke ausgebildeten, vorderen Querträger. Die Sitzschale ist von einem mit Sicken verstärkten Blech gebildet und erstreckt sich frei schwingbar zwischen der Brücke und dem hinteren Bereich des Rahmens. Ausgehend von der Brücke fällt die Sitzschale nach hinten etwa um 15° ab. Mit ihrem vorderen Bereich soll die Sitzschale am Rahmen bzw. an der Brücke fest angeschlossen sein, während in ihrem mittleren und eventuell hinteren Bereich Verformungen möglich sind.

Die DE 198 03 784 A1 beschreibt einen Fahrzeugsitz mit mindestens einem Energieabsorptionselement. Auch hierbei ist innerhalb der Sitzstruktur eine vordere Querstütze angeordnet, an die sich eine hintere Sitzschale anschließt. Allerdings wird hier im Falle einer unfallbedingten Belastung der vordere, an die Querstütze angrenzende Bereich der Sitzschale nach unten verformt. Dadurch soll das Becken mit den Sitzbeinhöckern nur von der Querstütze zurückgehalten werden, wobei sich die Querstütze horizontal nach vorne unter Engergieabsorption verformen kann. Hier wird folglich eine Lücke zwischen der Querstütze und der Sitzschale gebildet, wodurch die Querstütze als Fangbügel wirken soll. Der Gesäßbereich der Person wird hierdurch aber in einem nur sehr kleinen, nahezu linienförmigen Flächenbereich belastet.

Die DE 198 59 197 A1 beschreibt ein Gestell eines Fahrzeugsitzes mit einer Antidurchtauchquerstrebe. Die Querstrebe erstreckt sich transversal und kann sich unter Einwirkung von Mitnahmemitteln aus einer Ruheposition in eine aktivierte Position bewegen, in welcher die Querstrebe die Bewegung des Beckens nach vorne auf dem Sitz begrenzen soll.

Die GB 1 322 280 beschreibt einen Sicherheitssitz, dessen Sitzteil aus zahlreichen Teilen besteht, die jeweils gelenkig miteinander verbunden sind. Es handelt sich somit um eine recht aufwendige Konstruktion.

Die FR 2 755 913 beschreibt einen Fahrzeugsitz mit einer Schwenckbaren sitzstruktur als Antisubmarining-Einrichtung.

Der vorliegenden Erfindung liegt die Aufgabe zugrunde, ein Sitzteil der eingangs beschriebenen Art zu schaffen, welches mit konstruktiv und herstellungsmäßig einfachen Mitteln einen verbesserten Antisubmarining-Effekt und damit eine erhöhte Sicherheit gewährleistet.

Erfindungsgemäß wird dies dadurch erreicht, dass die Sitzschale mit dem Querträger derart verbunden ist, dass bei Einleitung einer unfallbedingt zumindest bis auf eine bestimmte Auslösekraft erhöhten Sitzkraft die Sitzschale relativ um den Querträger mit steiler werdendem Neigungswinkel verschwenkbar ist. Dies bedeutet, dass die Sitzschale mit dem Querträger verbunden bleibt, aber durch die Verschwenkung eine steiler werdende Rampe gebildet wird, die das Gesäß der jeweiligen Person großflächig abstützt und so gegen Durchtauchen unter dem Beckengurt hinweg zurückhält. Die steiler werdende Rampe wirkt somit einer Vorverlagerung des Beckens wirksam, aber durch die relativ große Stützfläche sehr schonend entgegen.

Weitere vorteilhafte Ausgestaltungsmerkmale der Erfindung sind in den Unteransprüchen sowie der folgenden Beschreibung enthalten.

Anhand von bevorzugten, in der Zeichnung veranschaulichten Ausführungsformen soll die Erfindung genauer erläutert werden. Dabei zeigen:
- Fig. 1: eine stark schematische Seitenansicht eines erfindungsgemäßen Sitzteils mit einer ersten Ausführungsform einer Antisubmarining-Schutzeinrichtung,
- Fig. 2: eine Ansicht analog zu Fig. 1 mit einer zweiten Ausführungsform der Schutzeinrichtung und
- Fig. 3: eine Ausschnittvergrößerung des Bereichs III in Fig. 1 bzw. 2.

Wie sich aus jeder der beiden Zeichnungsfiguren 1 und 2 ergibt, weist ein Fahrzeugsitz 1 ein unteres Sitzteil 2 und in aller Regel eine Rückenlehne 4 auf. Die vorliegende Erfindung betrifft in der Hauptsache das untere Sitzteil 2, welches eine tragende Sitzstruktur 6 aufweist, die über nicht dargestellte Haltemittel auf einer Bodenstruktur 8 des jeweiligen Fahrzeugs gehalten ist.

Die Sitzstruktur 6 weist einen in Sitzrichtung gesehen vorderen Querträger 10 sowie eine Sitzschale 12 auf, die ausgehend von dem vorderen Querträger 10 zumindest bereichsweise in einem Neigungswinkel α nach hinten abfallend verläuft, wobei dieser Neigungswinkel α etwa im Bereich von 10° bis 15° liegt. Die Sitzschale 12 kann mit Vorteil aus Metall-Blech, aber auch aus insbesondere (glas)faserverstärktem Kunststoff gebildet sein.

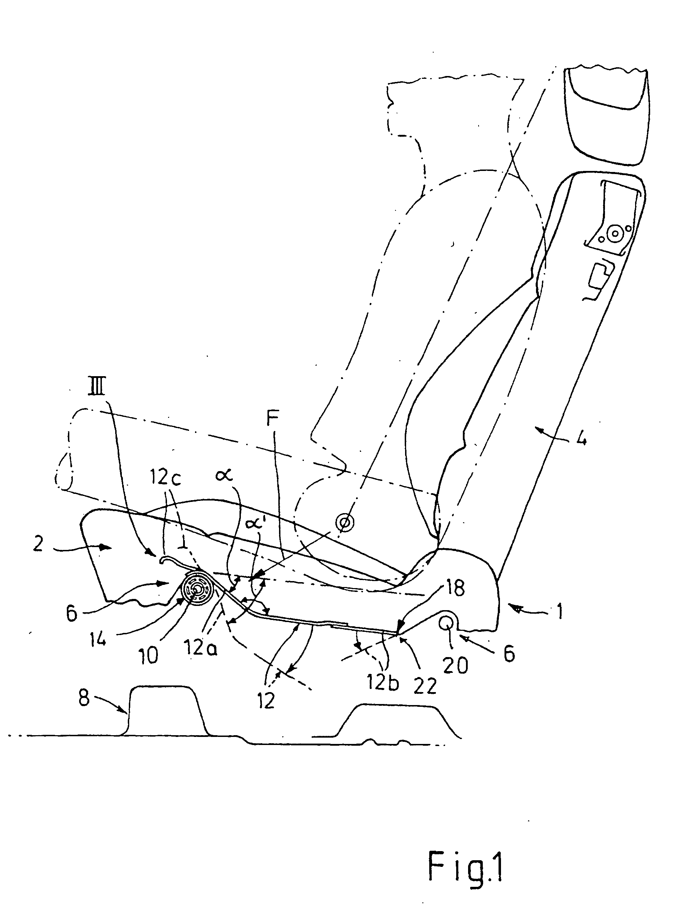

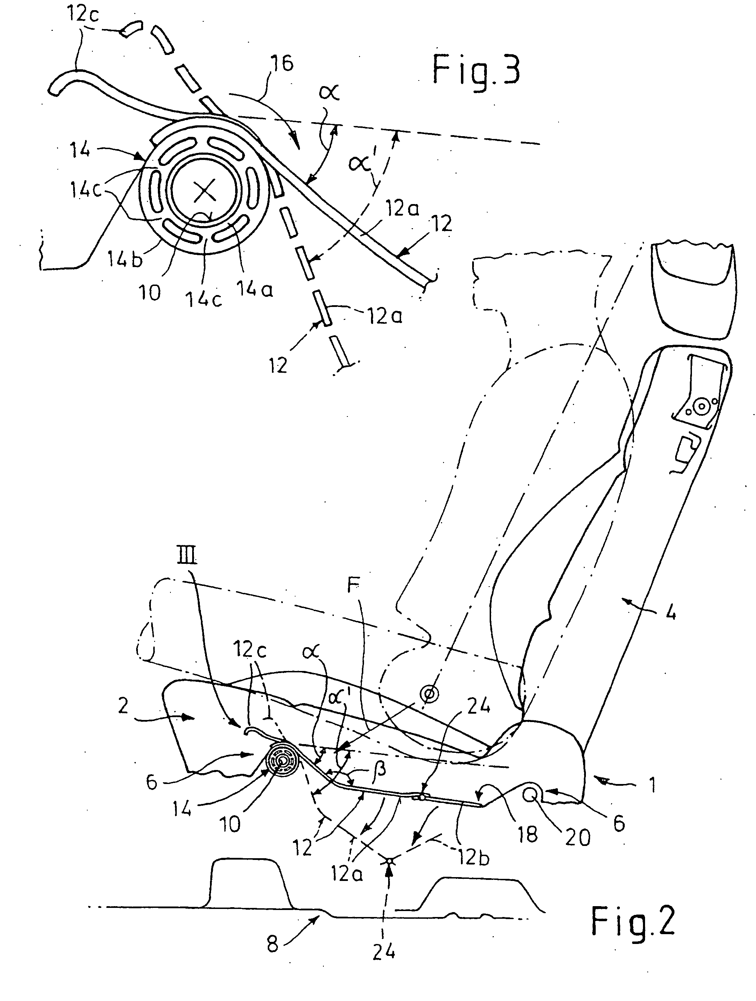

Erfindungsgemäß ist die Sitzschale 12 mit dem vorderen Querträger 10 derart verbunden, dass bei Einleitung einer insbesondere unfallbedingten, erhöhten Sitzkraft F die Sitzschale 12 bei Erreichen bzw. Überschreiten einer bestimmten Auslösekraft relativ um den Querträger 10 mit steiler werdendem Neigungswinkel α' verschwenkbar ist. Diese unfallbedingt verschwenkte Stellung ist in den Fig. 1 und 2 jeweils gestrichelt eingezeichnet. Der steilere Winkel α' liegt mit Vorteil etwa in einem Bereich von 45° bis 60°.

Wie am besten in der Ausschnittvergrößerung in Fig. 3 zu erkennen ist, weist in bevorzugter Ausgestaltung der Erfindung der Querträger 10 ein doppelwandiges Profilelement 14 mit einem ortsfest auf dem Querträger 10 sitzenden Innenprofil 14a und einem mit der Sitzschale 12 drehfest verbundenen, rohrförmigen Außenprofil 14b auf. Dabei ist das Außenprofil 14b zusammen mit der Sitzschale 12 bei Erreichen oder Überschreiten der Auslösekraft F in Pfeilrichtung 16 relativ zu dem Innenprofil 14a und dem Querträger 10 verdrehbar. In der dargestellten Ausführungsform ist das Außenprofil 14b koaxial mit dem Innenprofil 14a einstückig über speichenartige Stege 14c verbunden, wobei diese Stege 14c in Anpassung an die bestimmte Auslösekraft F als Sollbruchstellen ausgebildet sind. Dies bedeutet, dass bei Auftreten oder Überschreiten der Auslösekraft die Stege 14c brechen oder abscheren, so dass sich anschließend das Außenprofil 14b zusammen mit der Sitzschale 12 relativ zu dem Innenprofil 14a verdrehen kann.

In einer nicht dargestellten Alternative kann das Außenprofil 14b auch koaxial mit dem Innenprofil 14a derart über Reibungsmittel verbunden sein, dass durch die Auslösekraft ein bestimmtes Reibmoment überwunden wird, so dass sich dann das Außenprofil relativ zum Innenprofil verdrehen kann.

Das Profilelement 14 sitzt mit dem hohlen, rohrförmigen Innenprofil 14a verdrehfest auf dem Querträger 10. Die Sitzschale 12 ist entsprechend verdrehfest mit dem Außenprofil 14b verbunden. Das Profilelement 14 kann mit Vorteil als einstückiges Formteil aus einem Kunststoff oder einem gummiartigen Material gebildet sein.

Wie sich weiterhin aus Fig. 1 und 2 ergibt, ist die Sitzschale 12 mit ihrem hinteren, von dem vorderen Querträger 10 wegweisenden Randbereich 18 durch einen weiteren, hinteren Querträger 20 auf der Sitzstruktur 6 abgestützt. Dabei ist die Sitzschale 12 bevorzugt in zwei Abschnitte 12a und 12b unterteilt, und zwar in einen mit dem vorderen Querträger 10 verbundenen, vorderen Stützabschnitt 12a und einen hinteren, mit dem hinteren Querträger 20 der Sitzstruktur 6 zusammenwirkenden Stützabschnitt 12b. Weiterhin ist es dabei vorteilhaft, wenn der vordere Stützabschnitt 12a in einen vorderen, mit dem Querträger 10 verbundenen und hauptsächlich den Neigungswinkel α definierenden Stützflächenbereich und einen sich über einen stumpfen Winkel β anschließenden, flacheren Sitzflächenbereich unterteilt ist. Der Winkel β liegt gemäß Fig. 2 etwa im Bereich von 110° bis 150°.

In der Ausführungsform nach Fig. 1 ist vorgesehen, dass der vordere Stützabschnitt 12a der Sitzschale 12 lose überlappend auf dem hinteren Stützabschnitt 12b abgestützt ist. Dabei ist dann der hintere Stützabschnitt 12b schwenkbeweglich über eine gelenkartige Verbindungsstelle 22 relativ zu dem hinteren Querträger 20 gehaltert. Dabei ist die Verbindungsstelle 22 derart ausgelegt, dass der hintere Stützabschnitt 12b den vorderen Stützabschnitt 12a im Überlappungsbereich gegen normale Kräfte abstützen kann. Eine Bewegung in die in Fig. 1 gestrichelt eingezeichnete Stellung wird erst durch die Auslösekraft F bewirkt.

Bei der in Fig. 2 dargestellten Ausführungsvariante sind die beiden Stützabschnitte 12a, 12b der Sitzschale 12 miteinander über eine Sollknickstelle 24 verbunden. Dabei ist dann der hintere Stützabschnitt 12b lose relativ zu dem hinteren Querträger 20 abgestützt. Hierbei wird durch die Auslösekraft F bewirkt, dass bei einem Verschwenken der Sitzschale 12 in der Sollknickstelle 24 eine Verformung erfolgt, durch die der hintere Randbereich 18 von seiner Abstützung freikommt; siehe die in Fig. 2 gestrichelt eingezeichnete Situation der Sitzschale 12.

In beiden Fällen nach Fig. 1 und Fig. 2 wird durch die Unterteilung der Sitzschale 12 bei einem Unfall eine vertiefte Gesäß-Abstützung mit steilerer, vorderer Rampe gebildet, die jedenfalls vorne am im Wesentlichen unverformten Querträger 10 angebunden bleibt. Dies führt vorteilhafterweise zu einer großflächigen Gesäß-Abstützung, wobei das Gesäß praktisch in eine vertiefte Aufnahme eintaucht und dadurch gegen nach vorne rutschen effektiv abgestützt wird.

In diesem Zusammenhang ist es vorteilhaft, wenn das Längenverhältnis des vorderen Stützabschnittes 12a zu dem hinteren Stützabschnitt 12b etwa 2/3 zu 1/3 beträgt.

Der Vollständigkeit halber sei erwähnt, dass die Sitzschale 12 einen vorderen, sich über den Bereich des Querträgers 10 hinaus erstreckenden Abschnitt 12c aufweist. Dieser vorderer Abschnitt 12c vergrößert bzw. verlängert die unfallbedingt steiler werdende Rampe noch weiter nach vorne, bzw. in der verdrehten Stellung auch nach oben.

## Patentansprüche

1. Sitzteil (2) für einen Fahrzeugsitz (1) mit einer Schutzeinrichtung gegen unfallbedingtes Durchrutschen einer Person, mit einer an einer tragenden Sitzstruktur (6) angeordneten Sitzschale (12), die ausgehend von einem in Sitzrichtung vorderen Querträger (10) zumindest bereichsweise in einem Neigungswinkel (α) nach hinten abfallend verläuft,
**dadurch gekennzeichnet, dass** die Sitzschale (12) mit dem Querträger (10) derart verbunden ist, dass bei Einleitung einer unfallbedingt zumindest auf eine Auslösekraft erhöhten Sitzkraft (F) die Sitzschale (12) relativ um den Querträger (10) mit steiler werdendem Neigungswinkel (α') verschwenkbar ist.

2. Sitzteil nach Anspruch 1,
**dadurch gekennzeichnet, dass** der Querträger (10) ein doppelwandiges Profilelement (14) mit einem ortsfest gehalterten Innenprofil (14a) und einem mit der Sitzschale (12) verbundenen, rohrförmigen Außenprofil (14b) aufweist, wobei das Außenprofil (14b) beim Erreichen oder Überschreiten der Auslösekraft relativ zu dem Innenprofil (14a) verdrehbar ist.

3. Sitzteil nach Anspruch 2,
**dadurch gekennzeichnet, dass** das Außenprofil (14b) mit dem Innenprofil (14a) koaxial über Stege (14c) verbunden ist, wobei die Stege (14c) in Anpassung an die Auslösekraft (F) als Sollbruchstellen ausgebildet sind.

4. Sitzteil nach Anspruch 2,
**dadurch gekennzeichnet, dass** das Außenprofil (14b) koaxial mit dem Innenprofil (14a) derart über Reibungsmittel verbunden ist, dass die Auslösekraft gegen ein bestimmtes Reibmoment wirkt.

5. Sitzteil nach einem der Ansprüche 2 bis 4,
**dadurch gekennzeichnet, dass** das Profilelement (14) mit dem hohlen Innenprofil (14a) verdrehfest auf dem Querträger (10) sitzt.

6. Sitzteil nach einem der Ansprüche 2 bis 5,
**dadurch gekennzeichnet, dass** die Sitzschale (12) verdrehfest mit dem Außenprofil (14b) verbunden ist.

7. Sitzteil nach einem der Ansprüche 2 bis 6,
**dadurch gekennzeichnet, dass** das Profilelement (14) als einstückiges Formteil aus einem Kunststoff oder einem gummiartigen Material gebildet ist.

8. Sitzteil nach einem der Ansprüche 1 bis 7,
**dadurch gekennzeichnet, dass** die Sitzschale (12) mit ihrem hinteren, von dem Querträger (10) wegweisenden Randbereich (18) durch die Sitzstruktur (6) abgestützt ist.

9. Sitzteil nach einem der Ansprüche 1 bis 8,
**dadurch gekennzeichnet, dass** die Sitzschale (12) in zwei Abschnitte (12a, 12b) unterteilt ist, und zwar in einen mit dem Querträger (10) verbundenen, vorderen Stützabschnitt (12a) und einen hinteren, mit einem hinteren Querträger (20) der Sitzstruktur (6) zusammenwirkenden Stützabschnitt (12b).

10. Sitzteil nach Anspruch 9,
**dadurch gekennzeichnet, dass** der vordere Stützabschnitt (12a) in einen vorderen, mit dem Querträger (10) verbundenen, den Neigungswinkel (α) definierenden Stützflächenbereich und einen sich über einen stumpfen Winkel (β) anschließenden, flacheren Sitzflächenbereich unterteilt ist.

11. Sitzteil nach Anspruch 9 oder 10,
**dadurch gekennzeichnet, dass** der vordere Stützabschnitt (12a) der Sitzschale (12) lose überlappend auf dem hinteren Stützabschnitt (12b) abgestützt ist, wobei der hintere Stützabschnitt (12b) schwenkbeweglich relativ zu dem hinteren Querträger (20) gehalten ist.

12. Sitzteil nach Anspruch 9 oder 10,
**dadurch gekennzeichnet, dass** die beiden Stützabschnitte (12a, b) der Sitzschale (12) über eine Sollknickstelle (24) miteinander verbunden sind, wobei der hintere Stützabschnitt (12b) insbesondere lose aufliegend relativ zu dem hinteren Querträger (20) abgestützt ist.

13. Sitzteil nach einem der Ansprüche 9 bis 12,
**dadurch gekennzeichnet, dass** das Längenverhältnis des vorderen Stützabschnittes (12a) zum hinteren Stützabschnitt (12b) etwa 2/3 zu 1/3 beträgt.

14. Sitzteil nach einem der Ansprüche 1 bis 13,
**dadurch gekennzeichnet, dass** die Sitzschale (12) einen vorderen, sich in Sitzrichtung über den vorderen Querträger (10) hinaus erstreckenden Abschnitt (12c) aufweist.

## Claims

1. Seat part (2) for a vehicle seat (1), having a device protecting a person from slipping because of an accident, and having a seat shell (12) which is arranged on a supporting seat structure (6) and, starting from a cross member (10) which is in front in the seat direction, runs in a manner dropping rearwards at least in some regions at an angle of inclination (α), **characterized in that** the seat shell (12) is connected to the cross member (10) in such a manner that, when a seat force (F), which is increased, because of an accident, at least to a triggering force, is introduced, the seat shell (12) can be pivoted in a relative manner about the cross member (10) at an angle of inclination (α') which becomes steeper.

2. Seat part according to Claim 1, **characterized in that** the cross member (10) has a double-walled profile element (14) with an internal profile (14a) secured in a fixed position and a tubular external profile (14b) which is connected to the seat shell (12), it being possible for the external profile (14b) to be rotated relative to the internal profile (14a) when the triggering force is reached or exceeded.

3. Seat part according to Claim 2, **characterized in that** the external profile (14b) is connected to the internal profile (14a) coaxially via webs (14c), the webs (14c) being designed as predetermined breaking points matched to the triggering force (F).

4. Seat part according to Claim 2, **characterized in that** the external profile (14b) is connected coaxially to the internal profile (14a) via frictional means in such a manner that the triggering force acts counter to a certain moment of friction.

5. Seat part according to one of Claims 2 to 4, **characterized in that** the profile element (14) having the hollow internal profile (14a) sits in a rotationally fixed manner on the cross member (10).

6. Seat part according to one of Claims 2 to 5, **characterized in that** the seat shell (12) is connected in a rotationally fixed manner to the external profile (14b).

7. Seat part according to one of Claims 2 to 6, **characterized in that** the profile element (14) is formed as a single-piece shaped part consisting of a plastic or a rubbery material.

8. Seat part according to one of Claims 1 to 7, **characterized in that** the seat shell (12) is supported by means of its rear edge region (18), which faces away from the cross member (10), by the seat structure (6).

9. Seat part according to one of Claims 1 to 8, **characterized in that** the seat shell (12) is divided into two sections (12a, 12b), specifically into a front supporting section (12a) connected to the cross member (10) and a rear supporting section (12b) which interacts with a rear cross member (20) of the seat structure (6).

10. Seat part according to Claim 9, **characterized in that** the front supporting section (12a) is divided into a front supporting surface region, which is connected to the cross member (10) and defines the angle of inclination (α), and a flatter seat surface region adjoining it via an obtuse angle (β).

11. Seat part according to Claim 9 or 10, **characterized in that** the front supporting section (12a) of the seat shell (12) is supported in a loosely overlapping manner on the rear supporting section (12b), the rear supporting section (12b) being held pivotably relative to the rear cross member (20).

12. Seat part according to Claim 9 or 10, **characterized in that** the two supporting sections (12a, b) of the seat shell (12) are connected to each other via a predetermined buckling point (24), the rear supporting section (12b) being supported, in particular in a loosely resting manner, relative to the rear cross member (20).

13. Seat part according to one of Claims 9 to 12, **characterized in that** the length ratio of the front supporting section (12a) to the rear supporting section (12b) is approximately 2/3 to 1/3.

14. Seat part according to one of Claims 1 to 13, **characterized in that** the seat shell (12) has a front section (12c) which extends in the seat direction beyond the front cross member (10).

## Revendications

1. Assise de siège (2) pour un siège de véhicule (1) comprenant un dispositif de protection contre le glissement d'une personne provoqué par un accident, comprenant une coque de siège (12) disposée sur une structure de siège portante (6), qui descend vers l'arrière suivant un angle d'inclinaison (α) au moins en partie à partir d'un support transversal avant (10) dans la direction du siège,
**caractérisée en ce que** la coque de siège (12) est connectée au support transversal (10) de telle sorte que lors de l'introduction d'une force de siège (F) accrue en raison d'un accident au moins jusqu'à une force de déclenchement, la coque de siège (12) puisse pivoter par rapport au support transversal (10) avec un angle d'inclinaison (α') de plus en plus raide.

2. Assise de siège selon la revendication 1,
**caractérisée en ce que** le support transversal (10) présente un élément profilé (14) à double paroi avec un profilé intérieur (14a) maintenu fixement et un profilé extérieur (14b) de forme tubulaire connecté à la coque du siège (12), le profilé extérieur (14b) pouvant tourner par rapport au profilé intérieur (14a) une fois la force de déclenchement atteinte ou dépassée.

3. Assise de siège selon la revendication 2,
**caractérisée en ce que** le profilé extérieur (14b) est connecté coaxialement au profilé intérieur (14a) par le biais de nervures (14c), les nervures (14c) étant réalisées sous forme de zones destinées à la rupture en correspondance avec la force de déclenchement (F).

4. Assise de siège selon la revendication 2,
**caractérisée en ce que** le profilé extérieur (14b) est connecté coaxialement au profilé intérieur (14a) par le biais de moyens de friction de telle sorte que la force de déclenchement agisse à l'encontre d'un couple de friction déterminé.

5. Assise de siège selon l'une quelconque des revendications 2 à 4,
**caractérisée en ce que** l'élément profilé (14) avec le profilé intérieur creux (14a) repose de manière fixe en rotation sur le support transversal (10).

6. Assise de siège selon l'une quelconque des revendications 2 à 5,
**caractérisée en ce que** la coque de siège (12) est connectée de manière fixe en rotation au profilé extérieur (14b).

7. Assise de siège selon l'une quelconque des revendications 2 à 6,
**caractérisée en ce que** l'élément profilé (14) est formé d'une pièce moulée d'une seule pièce en plastique ou en un matériau de type caoutchouc.

8. Assise de siège selon l'une quelconque des revendications 1 à 7,
**caractérisée en ce que** la coque de siège (12) est supportée avec sa région de bord (18) arrière tournée à l'opposé du support transversal (10) par la structure de siège (6).

9. Assise de siège selon l'une quelconque des revendications 1 à 8,
**caractérisée en ce que** la coque de siège (12) est divisée en deux portions (12a, 12b) et ce en une portion de support avant (12a) connectée au support transversal (10), et en une portion de support arrière (12b), coopérant avec un support transversal arrière (20) de la structure de siège (6).

10. Assise de siège selon la revendication 9,
**caractérisée en ce que** la portion de support avant (12a) est divisée en une région de surface d'appui avant connectée au support transversal (10) et définissant l'angle d'inclinaison (α) et en une région de surface de siège plus plane se raccordant par le biais d'un angle obtus (β).

11. Assise de siège selon la revendication 9 ou 10,
**caractérisée en ce que** la portion de support avant (12a) de la coque de siège (12) est supportée lâchement avec chevauchement sur la portion de support arrière (12b), la portion de support arrière (12b) étant maintenue avec un mouvement de pivotement par rapport au support transversal arrière (20).

12. Assise de siège selon la revendication 9 ou 10,
**caractérisée en ce que** les deux portions de support (12a, 12b) de la coque de siège (12) sont connectées l'une à l'autre par le biais d'un point destiné à la flexion (24), la portion de support arrière (12b) étant notamment supportée en reposant en appui lâchement par rapport au support transversal arrière (20).

13. Assise de siège selon l'une quelconque des revendications 9 à 12,
**caractérisée en ce que** le rapport de longueur de la portion de support avant (12a) à la portion de support arrière (12b) est d'environ 2/3 à environ 1/3.

14. Assise de siège selon l'une quelconque des revendications 1 à 13,
**caractérisée en ce que** la coque de siège (12) présente une portion (12c) avant s'étendant dans la direction du siège au-delà du support transversal avant (10).
